(19) Europäisches Patentamt
European Patent Office
Office européen des brevets

(11) **EP 2 141 865 A1**

(12) **EUROPEAN PATENT APPLICATION**

(43) Date of publication:
**06.01.2010 Bulletin 2010/01**

(51) Int Cl.:
***H04L 12/56*** (2006.01)

(21) Application number: **08014802.6**

(22) Date of filing: **20.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.07.2008 EP 08011942**

(71) Applicant: **Siemens Aktiengesellschaft**
**80333 München (DE)**

(72) Inventors:
- **Lazarovska, Marija**
  **1000 Skopje (MK)**
- **Ziller, Andreas**
  **81827 München (DE)**

(54) **Method for determining a route for the transmission of a sequence of data packets and ad-hoc mesh network**

(57) The invention relates to a method for determining a route for the transmission of a sequence of data packets between a source node (A) and a destination node (B) via a number of intermediate nodes (C) in an ad-hoc mesh network, especially a wireless ad-hoc mesh network. The method comprises the step of determining whether network coding may be performed on one or more of the number of intermediate nodes (C) during the determination of the route by a reactive route discovery protocol.

FIG 1

**Description**

The invention relates to a method for determining a route for the transmission of a sequence of data packets between a source node and a destination node via a number of intermediate nodes in an ad-hoc mesh network, especially a wireless ad-hoc mesh network. The invention further relates to an ad-hoc mesh network and a network device in an ad-hoc mesh network. Moreover, the invention relates to a route request message.

Wireless mesh networks allow the deployment of an efficient network infrastructure for the coverage of large areas. Cost effectiveness predestines those multi hop networks for rural areas or campuses where a wired infrastructure is not appropriate. Wireless mesh networks allow the fast deployment at sport events or even in disaster areas where quick establishment communication infrastructure is crucial.

However, mesh networks have to deal with the scarcity of bandwidth which is an essential limiting factor for radio networks and which cannot be easily compensated with additional interfaces. Therefore, it is crucial that the available resources are optimal utilized.

Most routing protocols like AODV (Ad-hoc On-demand Vector Routing), DSR (Dynamic Source Routing), OLSR (according to RFC 3626) or OSPF (according to RFC 2328) optimize schedules centrally or distributed with proactive or reactive routing methods in order to optimize routing after a certain metric. In ad-hoc mesh networks typically reactive routing is applied. DSR is an example for a reactive routing method. Typically, routes are optimized implicitly after the distance and the congestion, respectively, without utilization of an explicit metric. Those routes whose establishment is finished first are chosen for the data transmission. These routes are also those with the best quality of service (QoS), which can be expected. When determining the route an evenly distributed workload of the nodes of the network is targeted. This is to avoid an overload of a network.

Network coding addresses the problem of optimal utilization of available resources in a mesh network. In this theory, redundant knowledge in terms of overheard packets in meshed structures is exploited in order to increase the entropy of transmitted data packets. Redundant information is often available, especially in wireless networks, where nodes can easily overhear messages sent by other nodes due to the broadcast nature in the wireless medium.

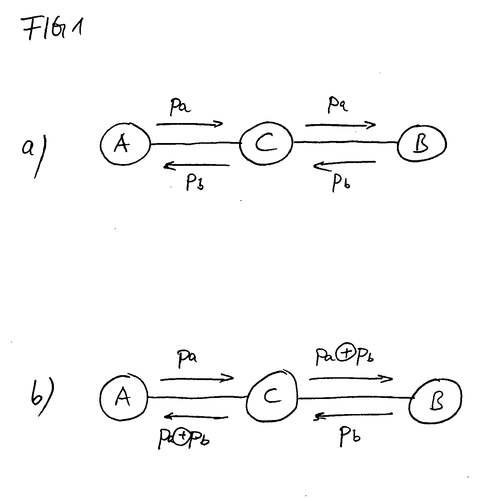

In network coding, intermediate nodes are able to code incoming packets from different neighbours to a single packet which is then forwarded as a broadcast and multicast message, respectively, to a various number of receivers. The idea behind that is that each receiving node holds enough information to decode the information which is designated for it. The principle of network coding will be briefly described by reference to Fig. 1A and 1B. A wireless mesh network comprises nodes A, B and C. Node A represents a source node. Node B represents a destination node. In this example, a data package $p_a$ is sent from node A to node B via intermediate node C. Node B replies with a data package $p_b$ to node A via the intermediate node C. In a traditional paradigm where no network coding is used the following transmissions are necessary as outlined in Fig. 1A: $A \rightarrow C: p_a$; $C \rightarrow B: p_a$; $B \rightarrow C: p_b$; $C \rightarrow A: p_b$. In order to exchange the data packets $p_a$ and $p_b$, respectively, between nodes A and B, and vice versa, four transmissions are necessary.

In a radio network nodes A and B are able to overhear all transmissions from node C. In this case, with the transmission of a coded data packet by node C which can be decoded from nodes A and B with their available knowledge one transmission can be saved. The communication pattern for the same bidirectional flow looks as follows: $A \rightarrow C: p_a$; $B \rightarrow C: p_b$; $C \rightarrow A; B: p_a \oplus p_b$. If the bitwise xor function ($\oplus$) is considered as a coding function applied by node C than nodes A and B can decode data packets sent from node C with the data packet they previously sent to node C before. Therefore, node A calculates $p_b = (p_a \oplus p_b) \oplus p_a$ and node B calculates $p_a = (p_a \oplus p_b) \oplus p_b$.

In the publications S. Katti, D. Katabi, W. Hu, H. Rahul, M. Médard: "The importance of Being Opportunistic: Practical Network Coding for Wireless Environments", Proceedings of Allerton Conference on Communication, Control and Computing, September 2005, and S. Katti, H. Rahul, W. Hu, M. Médard: "Xors in the Air: Practical Wireless Network Coding", Proceedings of SIGCOMM, 2006, a practical approach called COPE is disclosed which exploits network coding theory for 802.11 networks and extends the basic example from Fig. 1 to more than two receivers. Therefore, opportunistic listening is introduced where all the nodes cash all overheard packets from their neighbours. A shim layer between MAC and IP layer is added where packets are coded with multiple others in order to achieve a better throughput gain. In these documents it is shown that a gain of up to four times is possible compared to traditional forwarding. For applying COPE and network coding, respectively, it is important that coding opportunities and intermediate nodes arise. This is the case if packet flows on intermediate nodes have opposite directions. The core of COPE is to provide a protocol which is addressing the transmission between two adjacent nodes. For the transmission over multiple hops on network level, traditional routing is applied where no special support for network coding is provided.

However, traditional routing protocols try to avoid the concentration of multiple flows on intermediate nodes because this causes actually congestion.

It is therefore an object of the present invention to provide a method for determining a route between a source node and a destination node via a number of intermediate nodes which provides a better throughput of data in an ad-hoc mesh network, especially a wireless ad-hoc mesh network. It is a further object of the present invention to provide an ad-hoc mesh network and a network device being capable of carrying out the method of the invention. Furthermore, a route request message for determining a route between a source node and a destination node via a number of intermediate nodes which provides a better throughput of data in an ad-hoc mesh network, especially a wireless ad-hoc mesh network, has to be provided.

This object is solved by a method according to claim 1, a network according to claim 19, a network device according to claim 20 and a route request message according to claim 21. Preferred embodiments of the invention are set out in the dependent claims.

According to the invention, a method for determining a route for the transmission of the sequence of data packets between a source node and a destination node via a number of intermediate nodes in an ad-hoc mesh network, especially a wireless ad-hoc mesh network is provided, comprising the step of determining whether network coding may be performed on one or more of the number of intermediate nodes during the determination of the route by a reactive route discovery protocol.

The route discovery protocol which may be used for the invention is DSR, AODV or QSRM, for example. According to the method of the invention, packet flows, comprising a sequence of data packets, are concentrated on a certain extent to those intermediate nodes where network coding opportunities arise due to crossing or opposite packet flows. This allows a better utilization of network resources in terms of throughput and delay as transmissions are saved. This extra bandwidth can be used for higher data rates or additional flows.

Hence, within the method network coding capabilities of the network are exploited. This means that opportunities for the application of network coding opportunities on intermediate nodes are determined and according to this information flows are directed over those nodes, where network coding is applicable. Therefore, the method allows resource optimization since the physical workload can be reduced by saving real transmissions. This has an effect for the whole network and the number of flows and therefore the number of users can be increased without a quality of service (QoS) degradation per flow in terms of delay or throughput.

Furthermore, the invention mitigates also the impact of high traffic load on the network performance as it is possible to transmit packets of multiple flows with only one transmission. Especially in the case of congestion, where traditional methods often fail as they try to avoid congested regions due to QoS degradation, the method of the invention is advantageous because high traffic load actually helps in the applicability of network coding.

According to a preferred embodiment, a potential flow comprising a sequence of data packets is preferably directed over those of the number of intermediate nodes where network coding operations may be performed due to at least one suited existing flow. A network coding operation therefore is taken into account if the at least one suited existing flow is opposite to or crossing a potential determined route.

According to a further embodiment, a route is established with repeated flooding of route requests and a subsequent route reply which travels back from the destination node on a discovered forward route to the source node taking into account the network coding opportunities. It is further advantageous if the content of a route request is recalculated by each intermediate node when receiving a route request thereby considering specific network coding parameters. By using the known mechanisms of determining a route for transmission of a sequence of data packets by using a reactive route discovery protocol it is possible to add information to the route requests enabling the intermediate nodes and the destination node to find a route with the best possibility for network coding. A route request exploiting network coding opportunities comprises at least one of the following specific network coding parameters:

- a number of nodes (NCN) on a path of a flow which combine that flow at least with one another flow;
- an extra route delay (ERD) for a flow which approximates the packet delay imposed by the at least one intermediate node of the path of the flow;
- a total number of neighbours (TNN) of a route;
- a length of the route (RL); and
- a coding list (COL).

To determine the best route for the transmission of the sequence of data packets between the source node and the destination node a quality estimation for each potential route is carried out by the destination node as basis for a decision for establishing the final route by sending a route reply, thereby using the at least one parameter in the route request. The decision about the final route is made on the basis of at least one of the specific network coding parameters. It is to be noted that in contrast to conventional reactive route discovery protocols a route reply may be sent to an intermediate node whose route request was not received first.

The at least one intermediate node receiving a route request calculates a new value for the number of nodes (NCN) for a potential flow in the case an entry for the receiving intermediate node exists in the coding list of the received route request.

Furthermore, the at least one intermediate node receiving a route request calculates a new value for the total number of neighbours (TNN) by adding the number of neighbours of the receiving intermediate node to the value of the total number of neighbours in the received route request.

Moreover, the at least one intermediate node receiving a route request updates the coding list (COL) by determining how the potential flow could be coded with other existing flows going over the intermediate node.

The at least one intermediate node receiving a route request determines which of at least one coding group comprising a set of flows which are coded together is suited to be combined with the potential flow, whereby a coding group is suited if all included flows in the coding group are suited for coding with the flow.

A flow is suited if its next hop node which is the node following the intermediate node on the path to the destination node is either the node sending the route request or a common neighbour of the receiving intermediate node and the node sending the route request.

If a suited coding group is found it is determined which neighbour nodes to the intermediate node are suited as a next hop node for the potential flow, whereby a neighbour is suited for the next hop node of the potential flow if it is a previous hop or it is neighboured to a previous hop node of all flows in the coding group. The purpose is to add the potential flow to that coding group in case of success.

For all those neighbour nodes which are suited as a next hop node a tuple is created, the tuple comprising the respective neighbour node and an optional coding grade, whereby a coding grade indicates the number of flows combined in a coding group. Especially, only those tuples are added to the coding list where the coding grade is greater than zero.

The at least one intermediate node which is not a destination node sets up the final route if it has a fresh route in its cache to the destination node which is asked in the received route request, whereby a route is fresh if its age is less than a fixed time value. For that purpose it may maintain a time step for each route and flow, respectively, in its routing list and flow table, respectively.

The destination node determines by using a decision function considering the performance of a route which of the plurality of route requests representing different routes for the potential flow will be answered with a route reply. The determination may be made within a predetermined time after reception of a route request for the potential flow.

Upon reception of a route reply for the flow the at least one intermediate node either adds the flow to the according coding group as it is determined during the processing of the respective route request or creates a new coding group with the flow as a single member if no suited coding group exists.

Furthermore, the invention provides an ad-hoc mesh network, especially a wireless ad-hoc mesh network, comprising means for carrying out the method steps of the invention as set out above. Furthermore, a network device in an ad-hoc mesh network, especially a wireless ad-hoc mesh network, is suggested, whereby the network device acts as an intermediate node and comprises means for carrying out method steps as set out above.

Finally, the invention provides a route request message of a reactive route discovery protocol comprising at least one parameter which is used for the determination whether network coding may be performed on a network node receiving the route request message.

The invention will be described in more detail by reference to the figures.

Fig. 1     shows a comparison of the basic principles of data transmission according to a conventional routing protocol in comparison to network coding,

Fig. 2     shows a first example of an ad-hoc mesh network illustrating different possibilities of determining a route from a source node to a destination node, and

Fig. 3     shows a second embodiment of an ad-hoc mesh network illustrating the determination of a route between a source node and a destination node according to the invention.

The invention is based on a routing mechanism which determines a route between a source node and the destination node where it is determined whether network coding may be performed on one or more of a number of intermediate nodes in an ad-hoc mesh network. According to this mechanism, flows comprising a sequence of data packets are preferably directed over those intermediate nodes where network coding operations are possible due to suited existing flows. Applying network coding mechanisms allow the transmission of the content of a packet without an explicit physical transmission. In this way, additional flows can be placed in the network without or with a minimized number of physical transmissions. The method according to the invention is to be used especially in wireless ad-hoc mesh networks.

For the purpose of using network coding in a wireless ad-hoc mesh network in combination with a reactive route discovery protocol the presence of a network coding protocol like COPE on a lower layer between two adjacent nodes is assumed. Before describing the method steps of the invention in more detail, it is believed to be helpful to have same definitions about terms used in this specification.

The term "table" is to be understood as a set of elements. These elements can either be tuples or other sets. An exemplary structure could be as follows:

$$\text{table} = \{t_1, t_2, \ldots, t_n\} \text{ with } t_i = <v_1, v_2, \ldots, v_m>$$

The term "flow" is a sequence of data packets which are transmitted from a source node to a destination node over one or several intermediate nodes. If a node maintains a flow in its flow table, this node is an intermediate node on the path of that flow.

If a flow is supposed to be "coded" with one or more other flows a coded packet is created by a coding function, e.g. the bitwise xor-function, which takes one packet of each flow as an input and calculates a combined packet as an output. This coded packet is broadcasted and decoded by the intended receivers. The decision which flows and which packets of these flows are coded together is done by the network coding protocol.

The term "connection" is defined by a source node, a destination node and optionally a service class and a route number. A route request RREQ identifies a connection. The difference to a flow is that a flow defines a path for a connection. There might be different flows for the same connection although it is considered that only one flow is established per connection.

The value NCN for a flow is the number of nodes on a path of that flow which combines that flow at least with one other flow. Hence, it is the number of hops of the flows where no extra transmission is necessary.

The value ERD represents an extra route delay for a flow which approximates the packet delay imposed by the intermediate nodes of the path of the flow. It is an additional performance metric with which classical QoS characteristics for route discoveries can be considered. It is a counter weight to the values NCN and TNN with which routes are optimized in direction of dense areas with contention. Since applying network coding opportunities is more or less beneficial for the whole network this parameter takes the optimization of the flow performance into account.

The value TNN is the total number of neighbours of a route. Its purpose is to indicate the potential for applying network coding on a flow in case only few flows are yet established so that no coding opportunities have arisen during route establishment.

The value RL represents the length of the route. It is increased on each hop of the route request RREQ by one.

The value ANT represents the additional number of transmission which is calculated out of the number of coding nodes on the route (NCN) and the route length. With this value the benefit through network coding for the overall network performance is expressed.

The value ANN represents the average number of neighbours on a route. This value stands for the potential of a route for applying network coding in the future when new flows are added to the network.

The value CARM is a value which estimates the quality of a route. It is determined by the destination node out of the values of the incoming route requests RREQs and is the base of decision for which route request RREQ the route reply RREP is answered in order to establish the route implied by the chosen route request RREQ. It estimates the performance of a route with different performance metrics. It considers the bandwidth saved by network coding in dependence of the route length, the estimated route quality in terms of delay (ERD) and the likelihood for applying network coding for that route in the future (ANN).

A "coding group" is a set of flows of an intermediate node which are coded together. The packets of a flow which form a coding group with only one element cannot be coded with another flow and are therefore forwarded by the intermediate node uncoded.

The term "coding grade" represents a number which indicates in combination with a node ID the number of flows combined in a coding group. The value is always one less as the size of the coding group.

In order to determine routes with the above mentioned properties an intermediate node has to maintain the following tables:

In the "neighbourhood table" information about the local topology of the network is maintained. Each node has to learn information about the connectivity between its neighbour nodes. This information can be retrieved either by explicit protocol messages on the reception reports which are part of the COPE protocol which is considered here as the underlying network coding protocol on the link layer.

Furthermore, each intermediate node maintains a "flow table" which includes all the active flows which are going currently over that node. The flow entry contains an entry for each active flow containing the following tuple {flow ID, previous hop, next hop, coding group id, number of flows in coding group}.

Furthermore, each intermediate node maintains a "coding group table" which includes all the coding groups which are comprised out of the flows on that intermediate node.

A "coding list" (COL) is included in a route request RREQ. It is a set of neighbours and their respective coding grades. The coding list informs their recipients of the route request RREQ about the coding benefit of a flow going over the sender of the route request and that recipient. The coding list is only designated for the direct neighbours of the node. For each route request it is completely recalculated.

The method according to the invention is based on an existing reactive route discovery protocol, like DSR, AODV or QSRM, where a route is established with repeated flooding of route requests RREQs and a subsequent route reply RREP which travels back on a discovered forward route to the source with the purpose to establish the final route. In order to achieve the defined properties of the routing method additional fields (NCN, ERD, TNN, RL, Coding List) are added to the route request RREQ.

Table 1 shows the format of the route request RREQ for the method of the invention where a non-source routing protocol like AODV or QSRM is used. Table 2 shows the format of a route request RREQ when a source routing protocol like DSR is used.

Table 1:

| RREQ_no_source{ | |
| --- | --- |
| Type | 8 Bit |
| Flags | 5 Bit |
| Reserved | 11 Bit |
| Hop Count | 8 Bit |
| RREQ ID | 32 Bit |
| Destination Address | 32 Bit |
| Destination Sequence Number | 32 Bit |
| Source Address | 32 Bit |
| Source Sequence Number | 32 Bit |
| NCN | 8 Bit |
| ERD | 8 Bit |
| TNN | 8 Bit |
| RL | 8 Bit |
| Size Coding List | 8 Bit |
| for(i=0; i< Size Coding List; i++){ | |
| Address Neighbour i | 32 Bit |
| Coding Grade Neighbour i | 8 Bit |
| } | |
| } | |

Table 2:

| RREQ_source{ | |
| --- | --- |
| Type | 8 Bit |
| Length | 8 Bit |
| Identification | 16 Bit |
| Destination Address | 8 Bit |
| for(i=0; i< Number Hops; i++){ | |
| Address i | |
| } | |
| NCN | 8 Bit |
| ERD | 8 Bit |

(continued)

| RREQ_source{ | |
|---|---|
| TNN | 8 Bit |
| Size Coding List | 8 Bit |
| for(i=0; i< Size | |
| Coding List; | |
| i++) { | |

Furthermore, the format of the route replies RREP in the method according to the invention is shown in tables 3 and 4 which is not different compared to conventional route replies. Table 3 shows the route reply for a non-source routing protocol and table 4 shows the route reply for a source routing protocol.

Table 3:

| RREP_no_source{ | |
|---|---|
| Type | 8 Bit |
| Flags | 2 Bit |
| Reserved | 9 Bit |
| Prefix | 5 Bit |
| Hop Count | 8 Bit |
| Destination Address | 32 Bit |
| Destination Sequence Number | 32 Bit |
| Source Address | 32 Bit |
| Source Sequence Number | 32 Bit |
| Lifetime | 32 Bit |
| } | |

Table 4:

| RREP_source{ | |
|---|---|
| Type | 8 Bit |
| Length | 8 Bit |
| Identification | 16 Bit |
| Source Address | 8 Bit |
| for(i=0; i< | |
| Number Hops; | |
| i++) { | |
| Address i | |
| } | |
| } | |

How these fields are updated, according to their purpose by the intermediate nodes on the transmission of the route request RREQ will be described below. With the parameters in the route request the quality of the discovered route can be estimated. This quality estimation is used by the destination node as basis for decision for establishing the final route with the route reply RREP.

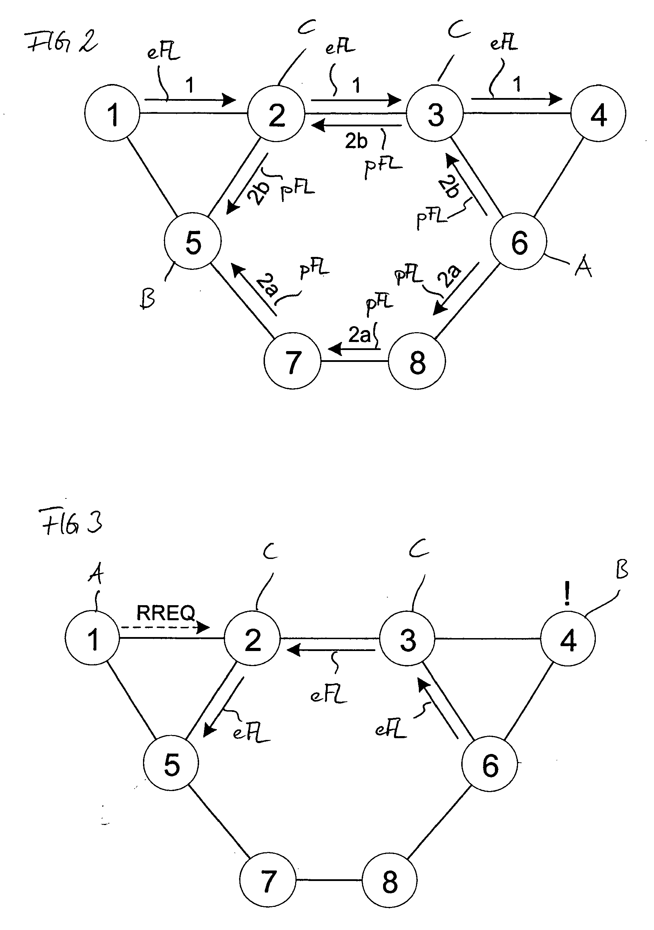

In the subsequent section, the processing of a route request RREQ on an intermediate node will be described. This will be done by reference to two embodiments shown in Fig. 2 and 3 where in general a source node in a wireless ad-hoc mesh network comprising nodes 1 to 8 is depicted with reference numeral A and a destination node is depicted with reference numeral B. Intermediate nodes being relevant for the network coding and being used in a determined route between the source node A and the destination node B are depicted with C. A detailed description of the specific situation in the embodiments of Fig. 2 and 3 will be given after illustrating the processing of route requests and route replies within the network.

Processing a route request RREQ on an intermediate node C:

The reception of the route request RREQ from source node A on an intermediate node indicates that a flow is supposed to be established which is going over intermediate node C. Let pFL be this potential flow. The route request RREQ is processed by an intermediate node C as described below and a new route request RREQ is created which is then broadcasted by the intermediate node C to its neighbours.

The intermediate node C calculates a new value for NCN which is the number of nodes on the potential flow pFL which combines pFL with at least one other flow. This means NCN is the number of hops of the potential flow pFL where no extra or additional transmission is necessary for the potential flow pFL. The new value for NCN corresponds to the old value for NCN increased by one in case an entry for the intermediate node C exists in the coding list of the route request RREQ.

Furthermore, the intermediate node C calculates a new value for ERD as follows:

$$\text{ERD}_{new} = \text{ERD}_{old} + \text{<Constant Waiting Time>} + \text{<Variable Waiting Time>/<Coding Grade of intermediate node c>} \quad (1)$$

The parameter "Constant Waiting Time" corresponds to the delay which is supposed to be fixed and which is independent of the load of the intermediate node C. The parameter "Variable Waiting Time" is the delay which is supposed to be variable and which is depending on the load of intermediate node C. For instance these two parameters could be a measured average waiting time of all the packets or packets with certain criteria in a queue of intermediate node C. This certain criteria could be a priority class, certain source/destination combinations and so on. The division by the coding grade takes into account that on a node where multiple flows are combined the queue is drained faster as more packets are combined in one transmission. In case the coding grade is not available the divisor is assumed to be 1.

Additionally, the intermediate node C calculates a new value for TNN as follows:

$$\text{TNN}_{new} = \text{TNN}_{old} + \text{<Number of neighbours of intermediate node c>} \quad (2)$$

Additionally, the intermediate node C calculates a new value for RL as shown below. In case a source routing protocol is used within the method according to the invention, the value for RL can be retrieved out of the list of intermediate nodes of the route request RREQ:

$$\text{RL}_{new} = \text{RL}_{old} + 1 \quad (3)$$

After reception of the route request RREQ, the intermediate node C determines the coding list being part of the route request RREQ. Therefore, the intermediate node C which might be coding capable determines how the potential flow pFL could be coded with other existing flows going over this intermediate node C. After the reception of the route request RREQ from the source node A the intermediate node C checks which coding group is suited for the potential flow pFL. A coding group is suited if all included flows are suited for coding with the potential flow pFL. A flow is suited if its next hop node which is the node following the intermediate node C on the path to the destination node B is either the source node A or a common neighbour of source node A and intermediate node C. In case such a coding group is found, it is determined which neighbours are suited as a next hop for the potential flow pFL so that the potential flow pFL can be added to that coding group. A neighbour is suited for a next hop of the potential flow pFL if it is a previous hop or it is neighboured to a previous hop node of all flows in that coding group.

For all the neighbours for which this applies a tuple is created which includes the neighbour and the coding grade. The tuples are added to the coding list which is in turn added to the new route request RREQ which is then broadcasted by the intermediate node C to all of its neighbours.

The purpose of the coding list is to forward the information to the direct neighbours of intermediate node C about the coding gain of the potential flow pFL in dependence of the next hop. Since this new route request including the coding list is broadcasted, the complete coding list has to be included. For efficiency reasons only entries where the coding grade is not 0 are included. In a variant the information about coding grades is not included in the route request at all.

The following algorithm to determine the coding list expresses the above described procedure in pseudo code:

Identifiers:

A       Node which forwards RREQ to C

C       Node which processes received RREQ from a

pFL     Potential flow which is supposed to be established

G       Set of all Coding Groups

i       Coding Group out of G

j       Flow out of the Coding Group i

D       Set of all Coding Groups which are suitable to code with pFL

d       Suitable Coding Group out of D

|d|     Number of flows in suitable Coding Group d

N       Set all of all neighbours of C

N$^*$   Set of all neighbours of C, which are also neighboured with A and can therefore overhear the transmissions of A

L       Coding List, which is comprised out of the tuple with the following structure {neighbour id, coding grade}

Algorithm:

```
function determine_Coding_List(A, C, G)
{
 L= { }
 D = determine_all_suitable_Coding_Groups(A, C, G)
 for all d ∈ D
 {
   for all n ∈ N
   {
     if < Neighbour n is neighboured or equal to a previous
         hop node of each flow in Coding Group d >
     {
       if < There exist no element in L for n with a Coding
           Grade greater or equal |d| >
       {
         L = L ∪ {n, |d|}
       }
     }
   }
 }
 return L
}
function determine_all_suitable_Coding_Groups(A, C, G)
{
 D = { }
for all i ∈ G
{
 if is_Coding_Group_coding_suitable(A, C, i) = true
 {
   D = D ∪ {i}
 }
}
return D
}
function is_ Coding_Group_coding_suitable(A, C, i)
{
 < Determine the set N* all neighbors from C which are also
     neighbors from A >
 for all j ∈ i
```

```
{
   if <Next Hop Node of j is NOT in N* and is NOT equal to
      A >
   {
      return false
   }
}
return true
}
```

The new calculated values for NCN, ERD, TNN and the coding list are included in a new created route request RREQ (cf. table 1 or table 2) which is broadcasted to all neighbours of the intermediate node C.

In an embodiment, an intermediate node C which is not the destination node can set up the final route if it has the so-called fresh route in its cache to the destination node which is required in the received route request RREQ. In such a case the intermediate node C answers with a route reply. For that purpose, intermediate node C maintains a time stamp for each route respectively flow in its routing table and flow table, respectively. A route is fresh if its age is less than a fixed value t.

Processing a route request RREQ at the destination node B:

Upon reception of a route request RREQ for a flow pFL at the destination node B the destination node B starts a timer. During that time destination node B waits for other incoming route requests RREQs for the connection defined by the route request. After exploration of that timer, destination node B decides whether decision function which of the route requests RREQ is chosen to be answered with the route reply RREP. The different cached route requests RREQs represent different routes with different intermediate nodes C. The decision function is based on the fields NCN, ERD and TNN which are stored in the route request RREQ with which a value CARM is determined as follows:

$$ANT = RL - NCN \qquad\qquad (4)$$

$$ANN = TNN/RL \qquad\qquad (5)$$

$$CARM = (C1 \cdot ANT + C_2 \cdot ERD)/ANN \qquad (6)$$

The parameters $C_1$ and $C_2$ are weighting factors for the values ANT and ERD. The destination node B chooses the route request RREQ with the best value of CARM which in this example corresponds to the lowest value. Destination node B creates a route reply RREP which is forwarded over the intermediate node from which it receives the route request for which the best value of CARM is calculated in order to finally establish the route.

Processing of a route reply RREP on an intermediate node C:

Upon reception of a route reply RREP for a chosen flow an intermediate node C adds the flow parameters to the flow table and adds the flow to the according coding group as it is predetermined in a previous step during the processing of the respective route request RREQ. In case no suited coding group exists, the intermediate node C creates a new coding group with the flow as a single member. After that the intermediate node C forwards the route reply RREP to the hop node from which it previously received the according route request RREQ for the potential flow.

These basic principles will be illustrated by way of two examples in figures 2 and 3.

With reference to Fig. 2, a wireless ad-hoc mesh network comprising eight nodes 1 to 8 is shown. In this example it is illustrated how network coding can save transmissions in the network. A flow 1 is already established between node 1 and node 4. Therefore, an existing flow eFL comprises data packets 1. Upon establishment of a second flow between node 6 being a source node A and node 5 being a destination node B, the exact route has to be determined. Considering a network where network coding cannot be applied a potential flow pFL comprising data packets 2a might be the best choice since this route is node-disjoint with the existing flow eFL. However, for this flow pFL with data packets 2a three additional transmissions are necessary with the consequence that this bandwidth is not available for any further flow.

In case the transmission of data packets is carried out without applying network coding in total six transmissions (node 1 transmits data packet 1; node 2 transmits data packet 1; node 3 transmits data packet 1; node 6 transmits data packet 2a; node 8 transmits data packet 2a; node 7 transmits data packet 2a) are necessary.

With the application of network coding route 2b (another potential flow pFL) might be a better choice as only one additional transmission is necessary. Hence, only four transmissions are necessary if network coding is applied and the potential flow pFL corresponds to a route comprising data packets 26.

1. Node 1 transmits data packet 1 which is overheard by nodes 2 and 5,
2. Node 2 transmits coded data packet 1 ⊕ 2b, overheard by nodes 1, 3 and 5 whereby node 5 decodes data packet 2b,
3. Node 6 transmits data packet 2b, overheard by nodes 3, 4 and 8,
4. Node 3 transmits coded data packet 1 ⊕ 2b, overheard by nodes 2, 4 and 6, whereby node 4 decodes data packet 1.

With reference to Fig. 3 it is explained how the method according to the invention processes a route request RREQ on an intermediate node C, in particular node 2. In the network shown in Fig. 3 assume that there is an existing flow between node 6 and 5. Node 1 being a source node A wants to establish a new flow to node 4 being the destination node B. Node 1 therefore sends a route request RREQ which is received by node 2 being an intermediate node C. In order to determine how network coding can be applied best on that potential flow, node 2 checks if there is a coding group whose flow's next hop is either node 1 or a common neighbour of nodes 1 and 2. Actually, the flow between nodes 6 and 5 fulfils this requirement. The next step is now to determine all potential next hops for the new flow. In order to add the new flow to the existing coding group which means that the network coding can be applied the next hop must be either node 3 or a common neighbour of nodes 2 and 3. Since only node 3 exists, node 2 adds node 3 to the coding list with coding grade 1 and forwards the new route request to all of its neighbours.

The method according to the invention is based on the idea to combine network coding with a reactive routing protocol. In particular, network coding possibilities of a wireless ad-hoc mesh network are determined. In case there are network coding opportunities on intermediate nodes of the network, flows are directed over those nodes. In contrast to traditional routing methods which try to avoid congested areas, use of network coding opportunities requires a certain degree of congestion.

The method according to the invention allows a new quality of resource optimization since in contrast to traditional resource optimization schemes the physical workload is reduced by saving real transmissions. This is beneficial for the whole network as the number of flows and therefore the number of user can be increased without a QoS degradation per flow in terms of delay or throughput.

On a certain extend, the invention mitigates the impact of high traffic load on the network performance as it is possible to transmit packets of multiple flows with only one transmission. Especially in case of congestion where traditional methods often fail as they try to avoid congested region due to QoS degradation, the method according to the invention is advantageous because high traffic load actually helps in the applicability of network coding.

In order to obtain short routes, the method takes the route length as an optimization parameter into consideration. This is necessary as the shorter of the two routes with the same number of extra transmissions but different length is better since each hop imposes an extra delay independently whether extra bandwidth has to be consumed or not.

**Claims**

1. A method for determining a route for the transmission of a sequence of data packets between a source node (A) and a destination node (B) via a number of intermediate nodes (C) in an ad-hoc mesh network, especially a wireless ad-hoc mesh network, comprising the step of determining whether network coding may be performed on one or more of the number of intermediate nodes (C) during the determination of the route by a reactive route discovery protocol.

2. The method according to claim 1, wherein a potential flow (pFL), comprising of a sequence of data packets, is preferably directed over those of the number of intermediate nodes (C) where network coding operations may be performed due to at least one suited existing flow (eFL).

3. The method according to one of the preceding claims, wherein a route is established with repeated flooding of route requests and a subsequent route reply which travels back from the destination node (B) on a discovered forward route to the source node (A) taking into account the network coding opportunities.

4. The method according to claim 3, wherein the content of a route request is recalculated by each intermediate node (C) when receiving a route request thereby considering specific network coding parameters.

5. The method according to claim 4, wherein a route request exploiting network coding opportunities comprises at least one of the following specific network coding parameters:

- a number of nodes (NCN) on a path of a flow which combine that flow at least with one other flow;
- an extra route delay (ERD) for a flow which approximates the packet delay imposed by the at least one intermediated node of the path of the flow;
- a total number of neighbours (TNN) of a route;
- a length of the route (RL);
- a coding list (COL).

6. The method according to claim 5, wherein a quality estimation for each potential route is carried out by the destination node (B) as basis for a decision for establishing the final route by sending a route reply, thereby using the at least one parameter in the route request.

7. The method according to claim 5 or 6, wherein the at least one intermediate node (C) receiving a route request calculates a new value for the number of nodes (NCN) for a potential flow (pFL) in the case an entry for the receiving intermediate node (C) exists in the coding list (COL) of the received route request.

8. The method according to one of claims 5 to 7, wherein the at least one intermediate node (C) receiving a route request calculates a new value for the total number of neighbours (TNN) by adding the number of neighbours of the receiving intermediate node (C) to the value of the total number of neighbours (TNN) in the received route request.

9. The method according to one of claims 5 to 8, wherein the at least one intermediate node (C) receiving a route request updates the coding list (COL) by determining how the potential flow (pFL) could be coded with other existing flows (eFL) going over the intermediate node (C).

10. The method according to claim 9, wherein the at least one intermediate node (C) receiving a route request determines which of at least one coding group comprising a set of flows which are coded together is suited to be combined with the potential flow (pFL), whereby a coding group is suited if all included flows in the coding group are suited for coding with the flow (pFL).

11. The method according to claim 10, wherein a flow is suited if its next hop node which is the node following the intermediate node (C) on the path to the destination node (B) is either the node sending the route request or a common neighbour of the receiving intermediate node (C) and the node sending the route request.

12. The method according to claim 10 or 11, wherein if a suited coding group is found it is determined which neighbour nodes to the intermediate node (C) are suited as a next hop for the potential flow (pFL), whereby a neighbour is suited for the next hop node of the potential flow (r) if it is a previous hop or it is neighboured to a previous hop node of all flows in the coding group.

13. The method according to claim 12, wherein for all those neighbour nodes which are suited as a next hop node a tuple is created, the tuple comprising the respective neighbour node and an optional coding grade, whereby a coding grade indicates the number of flows combined in a coding group.

14. The method according to claim 13, wherein only those tuples are added to the coding list where the coding grade is greater than 0.

15. The method according to one of the preceding claims, wherein the at least one intermediate node (C) sets up the final route if it has a fresh route in its cache to the destination node (B) which is asked in the received route request, whereby a route is fresh if its age is less than a fixed time value.

16. The method according to one of the preceding claims, wherein the destination node (B) determines by using a decision function considering the performance of a route which of the plurality of route requests representing different routes for the potential flow (pFL) will be answered with a route reply.

17. The method according to claim 16, wherein the determination is made within a predetermined time after reception of a route request for the potential flow (pFL).

18. The method according to one of the preceding claims, wherein the at least one intermediate node (C) upon reception of a route reply for the flow (pFL) either adds the flow (pFL) to the according coding group as it is determined during the processing of the respective route request or creates a new coding group with the flow (pFL) as single member if no suited coding group exists.

19. An ad-hoc mesh network, especially wireless ad-hoc mesh network, comprising means for carrying out the method steps as set out above.

20. A network device in an ad-hoc mesh network, especially a wireless ad-hoc mesh network, the network device acting as an intermediate node (C) and comprising means for carrying out the method steps as set out above.

21. A route request message of a reactive route discovery protocol, comprising at least one parameter which is used for the determination whether network coding may be performed on a network node receiving the route request message.

FIG 1

a)

b)

FIG 2

FIG 3

**EUROPEAN SEARCH REPORT**

Application Number

EP 08 01 4802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JILIN LE ET AL: "DCAR: Distributed Coding-Aware Routing in Wireless Networks" DISTRIBUTED COMPUTING SYSTEMS, 2008. ICDCS '08. THE 28TH INTERNATIONAL CONFERENCE ON, IEEE, PISCATAWAY, NJ, USA, 17 June 2008 (2008-06-17), pages 462-469, XP031303706 ISBN: 978-0-7695-3172-4 * abstract * * page 462, left-hand column, line 21 - right-hand column, line 15 * * page 463, left-hand column, line 1 - right-hand column, line 11 * * page 463, right-hand column, line 27 - page 465, left-hand column, line 15 * * page 465, right-hand column, line 7 - line 23 * ----- -/-- | 1-21 | INV. H04L12/56 |

TECHNICAL FIELDS SEARCHED (IPC)

H04L

The present search report has been drawn up for all claims

| Place of search | Date of completion of the search | Examiner |
|---|---|---|
| The Hague | 14 August 2009 | Clemente Lafuente, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 08 01 4802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S. SENGUPTA, S. RAYANCHU, S. BANERJEE: "An Analysis of Wireless Network Coding for Unicast Sessions: The Case for Coding-Aware Routing" INFOCOM 2007, [Online] 6 May 2007 (2007-05-06), - 12 May 2007 (2007-05-12) pages 1028-1036, XP002540162 Retrieved from the Internet: URL:http://ieeexplore.ieee.org/stamp/stamp.jsp?arnumber=04215706> [retrieved on 2009-07-30] * abstract * * figures 2,4 * * page 1028, right-hand column, line 31 - page 1029, left-hand column, line 22 * * page 1029, right-hand column, line 35 - page 1030, left-hand column, line 2 * * page 1030, right-hand column, line 1 - line 8 * * page 1032, right-hand column, line 1 - page 1033, left-hand column, line 49 * * page 1034, right-hand column, line 34 - line 50 * <br><br>-----<br><br>-/-- | 1-21 | |
| | | | TECHNICAL FIELDS SEARCHED (IPC) |

The present search report has been drawn up for all claims

| Place of search | Date of completion of the search | Examiner |
|---|---|---|
| The Hague | 14 August 2009 | Clemente Lafuente, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 08 01 4802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN YAN ET AL: "Practical Coding-Aware Mechanism for Opportunistic Routing in Wireless Mesh Networks" COMMUNICATIONS, 2008. ICC '08. IEEE INTERNATIONAL CONFERENCE ON, IEEE, PISCATAWAY, NJ, USA, 19 May 2008 (2008-05-19), pages 2871-2876, XP031265862 ISBN: 978-1-4244-2075-9 * abstract * * page 2871, left-hand column, line 38 - right-hand column, line 6 * * page 2871, right-hand column, line 13 - line 21 * * page 2872, left-hand column, line 45 - right-hand column, line 3 * * page 2873, left-hand column, line 10 - page 2874, right-hand column, line 35 * ----- | 1-21 | |

**TECHNICAL FIELDS SEARCHED (IPC)**

The present search report has been drawn up for all claims

| Place of search | Date of completion of the search | Examiner |
|---|---|---|
| The Hague | 14 August 2009 | Clemente Lafuente, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)